# EUROPEAN PATENT SPECIFICATION

(11) **EP 4 266 464 B1**
(45) Date of publication and mention of the grant of the patent: **22.10.2025**
(21) Application number: 22723957.1
(22) Date of filing: 25.02.2022
(51) Int. Cl.: H01M 50/209, H01M 50/291, H01M 10/613, H01M 10/6554, H01M 50/289, H01M 10/625, H01M 10/647, H01M 10/651, H01M 10/653, H01M 10/6555, H01M 10/6556, H01M 10/6568, H01M 50/204, H01M 50/249, H01M 10/6557

(54) **BATTERY, POWER CONSUMPTION DEVICE, AND METHOD AND DEVICE FOR PRODUCING BATTERY**
BATTERIE, LEISTUNGSVERBRAUCHSVORRICHTUNG, SOWIE VERFAHREN UND VORRICHTUNG ZUR HERSTELLUNG VON BATTERIE
BATTERIE, DISPOSITIF DE CONSOMMATION DE PUISSANCE ÉLECTRIQUE, ET PROCÉDÉ ET DISPOSITIF DE PRÉPARATION DE BATTERIE

(43) Date of publication of application: 25.10.2023
(73) Proprietor: Contemporary Amperex Technology (Hong Kong) Limited, Central, Central And Western District (HK)
(72) Inventor: SUN, Zhanyu, Fujian 352100 (CN); LONG, Chao, Fujian 352100 (CN); CHEN, Xingdi, Fujian 352100 (CN); WANG, Peng, Fujian 352100 (CN); HUANG, Xiaoteng, Fujian 352100 (CN)
(74) Representative: Herrero & Asociados, S.L.
(86) International application number: PCT/CN2022/077993
(87) International publication number: WO 2023/159486

(56) References cited:
- EP-A1- 3 937 295
- CN-A- 1 328 705
- CN-A- 109 301 391
- CN-A- 111 900 288
- CN-A- 111 900 288
- CN-U- 202 550 023
- CN-U- 209 200 032
- CN-U- 210 200 804
- DE-A1- 102018 216 833
- US-A1- 2021 313 635
- US-A1- 2021 313 635
- US-B2- 10 797 365

## Description

### TECHNICAL FIELD

The present application relates to the field of battery technologies, and in particular, to a battery, a power consumption device, and a method and device for producing a battery.

### BACKGROUND

With the increasing environmental pollution, new energy industry has attracted more and more attention. In the new energy industry, battery technology is an important factor related to its development.

A space utilization rate of an interior of a battery affects structural strength and energy density of the battery, and further affects performance of the battery. How to improve the performance of the battery is an urgent technical problem to be solved in the battery technology.

CN111900288A discloses an isolation device for a battery pack and the battery pack. The isolation device comprises a box body, a plurality of battery packs are arranged in the box body, each battery pack is composed of a plurality of single batteries distributed in a rectangular array and an isolation device clamped between the maximum side faces of the single batteries, a heat insulation partition plate is arranged between every two adjacent battery packs, and each isolation device comprises two metal plates arranged in parallel. A liquid inlet main pipe and a liquid outlet main pipe which are diagonally arranged along the single batteries are also arranged in the box body. A shunt branch pipe is arranged between the liquid inlet main pipe and the liquid outlet main pipe in a communicating manner. The shunting branch pipes are arranged between the metal plates and are in close contact with the metal plates.

US2021313635A1 discloses a battery module assembly. The battery module assembly includes: at least two battery modules arranged along a first direction, each of the battery modules including a plurality of battery cells, and a shell side wall of the battery cell including two oppositely arranged first side walls and two oppositely arranged second side walls, an area of the first side wall being larger than that of the second side wall, and the first side wall being perpendicular to the first direction; and a cooling plate arranged between two adjacent battery modules, and configured to perform heat exchange with the first side walls of the battery cells of the two adjacent battery modules.

US10797365B2 discloses a battery module having a multiplicity of battery cells (4). The battery module (1) has a housing (2) with an interior space (3) in which the multiplicity of battery cells (4) is accommodated, wherein a housing wall (5, 6) of the housing (2) has a multiplicity of projections (7) facing toward the interior space (3) of the housing (2), wherein in each case two adjacent projections (7) delimit a flow channel (8) designed for a flow of temperature-control fluid, wherein the multiplicity of battery cells (4) makes direct contact in each case with the multiplicity of projections (7).

### SUMMARY

The scope of the invention is defined by the appended set of claims.

### BRIEF DESCRIPTION OF THE DRAWINGS

In order to illustrate the technical solutions in embodiments of the present application more clearly, brief description will be made below to drawings required in the embodiments of the present application, and apparently, the drawings described below are some embodiments of the present application only, and other drawings can be obtained based on these drawings by those ordinary skilled in this art without creative efforts.
FIG. 1 is a schematic structural diagram of a vehicle disclosed in an embodiment of present application;
FIG. 2 is a schematic diagram of an exploded structure of a battery disclosed in an embodiment of the present application;
FIG. 3 is a schematic structural diagram of a battery cell disclosed in an embodiment of the present application;
FIG. 4 is a schematic structural diagram of a battery disclosed in an embodiment of the present application;
FIG. 5 is a schematic partial diagram of a battery disclosed in an embodiment of the present application;
FIG. 6 is a schematic diagram of a spacer plate and an insulating layer disclosed in an embodiment of the present application;
FIG. 7 is a schematic diagram of a spacer plate having a cavity disclosed in an embodiment of the present application;
FIG. 8 is a schematic diagram of a mounting wall disclosed in an embodiment of the present application;
FIG. 9 is a schematic diagram of a reinforcing rib disclosed in an embodiment of the present application;
FIG. 10 is a schematic structural diagram of a battery disclosed in an embodiment of the present application;
FIG. 11 is a schematic diagram of a method for producing a battery according to an embodiment of the present application; and
FIG. 12 is a schematic diagram of a device for producing a battery according to an embodiment of the present application.

In the accompanying drawings, the accompanying drawings are not drawn to actual scale.

### DESCRIPTION OF EMBODIMENTS

Implementation manners of the present application will be further described below in detail with reference to the accompanying drawings and embodiments. The detailed description of the following embodiments and the accompanying drawings are used to examplarily illustrate principles of the present application, but cannot be used to limit the scope of the present application, that is, the present application is not limited to the described embodiments.

In the depiction of the present application, it is noted that unless otherwise defined, all technological and scientific terms used have the same meanings as those commonly understood by those skilled in the art to which the present application belongs. The terms used are merely for the purpose of describing specific embodiments, but are not intended to limit the present application. The terms "including" and "having" and any variations thereof in the specification and the claims of the present application as well as the brief description of the drawings described above are intended to cover non-exclusive inclusion. The term "a plurality of" means more than two; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus may not be understood as limitation to the present application. In addition, the terms "first", "second", and "third" are only intended for the purpose of description, and shall not be understood as an indication or implication of relative importance. The term "perpendicular" is not strictly perpendicular, but within an allowable range of error. The term "parallel" is not strictly parallel, but within an allowable range of error.

The word "embodiment" referred to in the present application means that descriptions of specific features, structures, or characteristics in combination with the embodiment can be included in at least an embodiment of the present application. The word at various parts in the specification does not necessarily refer to the same embodiment, or an independent or alternative embodiment exclusive of another embodiment. Those skilled in the art understand, in explicit and implicit manners, that the embodiment described in the present application may be combined with another embodiment.

The orientation words in the following description all represent directions shown in the drawings, and do not limit the specific structure of the present application. In the description of the present application, it should be further noted that unless otherwise explicitly specified and defined, terms "mounting", "connecting" and "connection" should be understood in a broad sense; for example, they may be a fixed connection, a detachable connection, or an integrated connection, may be a direct connection and may also be an indirect connection through an intermediate medium, or may be communication between the interiors of two elements. Those of ordinary skill in the art may appreciate the specific meanings of the above terms in the present application according to specific circumstances.

In the present application, the term "and/or" is only an association relation describing associated objects, which means that there may be three relations. For example, A and/or B may represent three situations: A exists alone, both A and B exist, and B exists alone. In addition, the character "/" in the present application generally indicates that the associated objects before and after the character are in an "or" relation.

In the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited by the embodiment of the present application. The battery cell may be cylindrical, flat, cuboid or in another shape, which is not limited by the embodiment of the present application. The battery cell is generally divided into three types according to the way of packaging: a cylindrical battery cell, a prismatic battery cell and a pouch battery cell, which is not limited by the embodiment of the present application.

The battery mentioned in the embodiment of the present application refers to a single physical module that includes one or more battery cells to provide a higher voltage and capacity. For example, the battery mentioned in the present application may include a battery pack, etc. The battery generally includes a box for enclosing one or more battery cells. The box may prevent liquid or other foreign matters from affecting the charging or discharging of the battery cells.

The battery cell includes an electrode assembly and an electrolytic solution, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active substance layer. The positive electrode active substance layer is coated on a surface of the positive electrode current collector, and the current collector not coated with the positive electrode active substance layer protrudes from the current collector coated with the positive electrode active substance layer and serves as a positive tab. In an example of a lithium-ion battery, the material of the positive electrode current collector may be aluminum, and the positive electrode active substance may be lithium cobalt oxides, lithium iron phosphate, ternary lithium, lithium manganate, or the like. The negative electrode sheet includes a negative electrode current collector and a negative electrode active substance layer. The negative electrode active substance layer is coated on a surface of the negative electrode current collector, and the current collector not coated with the negative electrode active substance layer protrudes from the current collector coated with the negative electrode active substance layer and serves as a negative tab. A material of the negative electrode current collector may be copper, and a negative electrode active substance may be carbon, silicon, or the like. In order to ensure that no fusing occurs when a large current passes, there are a plurality of positive tabs which are stacked together, and there are a plurality of negative tabs which are stacked together. A material of the separator may be polypropylene (PP) or polyethylene (PE), etc. In addition, the electrode assembly may be a winding structure or a laminated structure, and the embodiments of the present application are not limited thereto.

In order to meet different power demands, the battery may include a plurality of battery cells, where the plurality of battery cells may be in series connection, parallel connection or series-parallel connection. The series-parallel connection refers to a combination of series connection and parallel connection. Optionally, the plurality of battery cells may be first connected in series, in parallel or in series and parallel to constitute a battery module, and then a plurality of battery modules are connected in series, in parallel or in series and parallel to constitute a battery. That is, a plurality of battery cells may directly constitute a battery, or may first constitute battery modules, and then the battery modules constitute a battery. The battery is further disposed in a power consumption device to provide electrical energy for the power consumption device.

With the development of the battery technology, it is necessary to consider design factors in multiple aspects simultaneously, such as energy density, cycle life, discharging capacity, C-rate, safety, etc. When a space in an interior of a battery is fixed, improving a space utilization rate of the interior of the battery is an effective means to improving energy density of the battery. However, while the utilization rate of the space in the interior of the battery is improved, structural strength of the battery may be reduced. For example, a beam configured to mount a battery module is usually disposed in an interior of a box of the battery. In addition, the battery module in the battery is also provided with a side plate and an end plate. While implementing fixing of the battery, the above beam, side plate and end plate occupy the space in the interior of the battery as well. However, if the beam, the side plate and the end plate are not disposed, the structural strength of the battery will be insufficient, and performance of the battery will be affected.

In view of this, an embodiment of the present application provides a technical solution. In the embodiment of the present application, a spacer plate is disposed in a battery to be connected to a first wall of each battery cell of a column of a plurality of battery cells arranged in a first direction that has a largest surface area. The plurality of battery cells are connected as a whole through the spacer plate. In this case, a side plate can no longer be configured in the battery, and it is also not necessary to set a structure such as a beam, which can maximize a space utilization rate of an interior of the battery, and improve structural strength and energy density of the battery. The battery is further provided with a mounting wall connected to a second wall of each battery cell of the plurality of battery cells arranged in the first direction. The second wall is connected to the first wall, and when the battery cell is disposed in a power consumption device, the battery cell is located below the mounting wall and mounted on the mounting wall. In this way, the second wall of the battery cell is directly connected to the mounting wall, and no space needs to be left between the mounting wall and the battery cell, which further improves the space utilization rate of the interior of the battery and improves the energy density of the battery, and meanwhile, the battery cell is mounted on the mounting wall, which can improve the structural strength of the battery. Therefore, the technical solution of the embodiment of the present application can improve performance of the battery.

The technical solutions described in the embodiments of the present application are all applicable to various devices using batteries, such as mobile phone, portable apparatus, notebook computer, electromobile, electronic toy, electric tool, electric vehicle, ship and spacecraft. For example, the spacecraft includes airplane, rocket, space shuttle, spaceship, etc.

It should be understood that the technical solutions described in the embodiments of the present application are not only applicable to the above devices described, but also applicable to all devices using batteries. However, for the sake of brevity, the following embodiments take electric vehicle as an example for description.

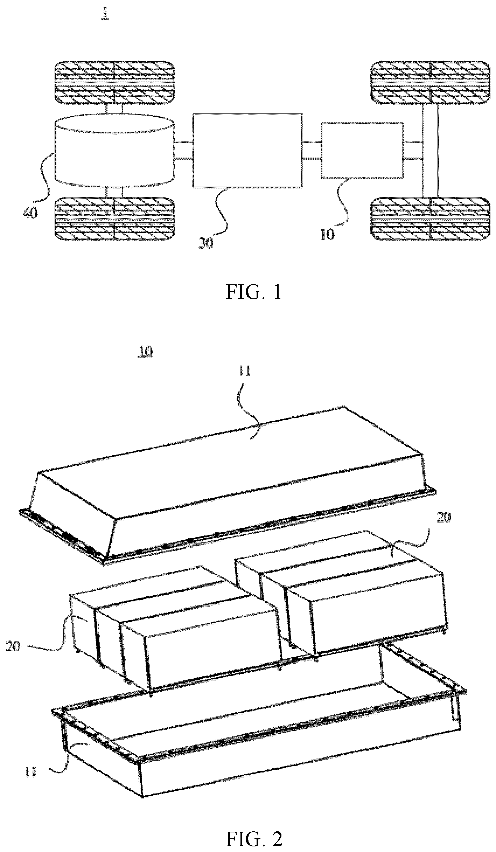

For example, FIG. 1 is a schematic structural diagram of a vehicle 1 according to an embodiment of the present application. The vehicle 1 may be a fuel-powered vehicle, a gas-powered vehicle or a new-energy vehicle. The new-energy vehicle may be a battery electric vehicle, a hybrid vehicle or an extended-range vehicle, or the like. A motor 40, a controller 30 and a battery 10 may be provided inside the vehicle 1, and the controller 30 is configured to control the battery 10 to supply power to the motor 40. For example, the battery 10 may be provided at the bottom or the head or the tail of the vehicle 1. The battery 10 may be configured to supply power to the vehicle 1. For example, the battery 10 can be used as an operation power supply of the vehicle 1 and is used for a circuit system of the vehicle 1, for example, for a working power demand of the vehicle 1 during startup, navigation and running. In another embodiment of the present application, the battery 10 may be used not only as an operating power supply for the vehicle 1 but also as a driving power supply for the vehicle 1, replacing or partially replacing fuel or natural gas to provide driving power for the vehicle 1.

In order to meet different power usage demands, the battery 10 may include a plurality of battery cells. For example, as shown in FIG. 2, FIG. 2 is a schematic structural diagram of a battery 10 according to an embodiment of the present application. The battery 10 may include a plurality of battery cells 20. The battery 10 may further include a box 11, an interior of the box 11 is a hollow structure, and the plurality of battery cells 20 are accommodated in the box 11. For example, the plurality of battery cells 20 are combined in parallel connection or series connection or series-parallel connection and then disposed in the box 11.

Optionally, the battery 10 may further include another structure, and details are not described herein again. For example, the battery 10 may also include a bus component. The bus component is configured to implement an electrical connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by means of welding. Electric energy of the plurality of battery cells 20 can be further led out through an electrically conductive mechanism passing through the box. Optionally, the electrically conductive mechanism may also belong to the bus component.

According to different power demands, the number of the battery cells 20 may be set to any value. The plurality of battery cells 20 can be connected in series, in parallel or in series and parallel to implement a larger capacity or power. Since there may be many battery cells 20 included in each battery 10, the battery cells 20 may be arranged in groups for convenience of installation, and each group of battery cells 20 constitutes a battery module. The number of the battery cells 20 included in the battery module is not limited and may be set according to demands. The battery may include a plurality of battery modules, and these battery modules may be connected in series, in parallel or in series and parallel.

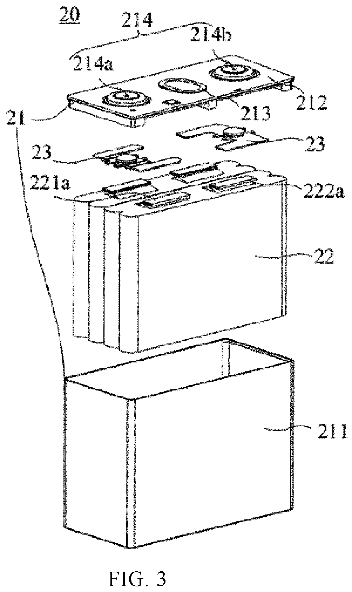

As shown in FIG. 3, FIG. 3 is a schematic structural diagram of a battery cell 20 according to an embodiment of the present application. The battery cell 20 includes one or more electrode assemblies 22, a housing 211 and a cover plate 212. The housing 211 and the cover plate 212 form a shell or a battery case 21. A wall of the housing 211 and the cover plate 212 are both referred to as a wall of the battery cell 20, where for a cuboid battery cell 20, the wall of the housing 211 includes a bottom wall and four side walls. The housing 211 is shaped according to the combined shape of the one or more electrode assemblies 22. For example, the housing 211 may be a hollow cuboid or cube or cylinder, and one surface of the housing 211 has a hole so that the one or more electrode assemblies 22 may be placed in the housing 211. For example, when the housing 211 is a hollow cuboid or cube, one plane of the housing 211 is an opening surface, i.e., the plane does not have a wall, so that the inside and outside of the housing 211 are in communication with each other. When the housing 211 is a hollow cylinder, an end face of the housing 211 is an opening surface, i.e., the end face does not have a wall, so that the inside and outside of the housing 211 are in communication with each other. The cover plate 212 covers the opening and is connected to the housing 211 to form a closed cavity in which the electrode assembly 22 is placed. The housing 211 is filled with an electrolyte, such as an electrolytic solution.

The battery cell 20 may further include two electrode terminals 214, and the two electrode terminals 214 may be disposed on the cover plate 212. The cover plate 212 is generally in the shape of a flat plate, and the two electrode terminals 214 are fixed on a flat plate surface of the cover plate 212. The two electrode terminals 214 are a positive electrode terminal 214a and a negative electrode terminal 214b, respectively. Each electrode terminal 214 is correspondingly provided with a connecting member 23, or a current collecting member 23, which is located between the cover plate 212 and the electrode assembly 22, and configured to electrically connect the electrode assembly 22 and the electrode terminal 214.

As shown in FIG. 3, each electrode assembly 22 has a first tab 221a and a second tab 222a. The polarities of the first tab 221a and the second tab 222a are opposite. For example, when the first tab 221a is a positive tab, the second tab 222a is a negative tab. The first tab 221a of the one or more electrode assemblies 22 is connected to one electrode terminal through one connecting member 23, and the second tab 222a of the one or more electrode assemblies 22 is connected to the other electrode terminal through the other connecting member 23. For example, the positive electrode terminal 214a is connected to the positive tab through one connecting member 23, and the negative electrode terminal 214b is connected to the negative tab through the other connecting member 23.

In the battery cell 20, according to actual usage demands, the number of electrode assemblies 22 may be set to be one or plural. As shown in FIG. 3, four independent electrode assemblies 22 are disposed in the battery cell 20.

A pressure relief mechanism 213 may also be disposed on the battery cell 20. The pressure relief mechanism 213 is configured to be actuated when an internal pressure or temperature of the battery cell 20 reaches a threshold, to relieve the internal pressure or temperature.

The pressure relief mechanism 213 may be in various possible pressure relief structures, which is not limited in the embodiment of the present application. For example, the pressure relief mechanism 213 may be a temperature-sensitive pressure relief mechanism configured to be capable of being melted when an internal temperature of the battery cell 20 provided with the pressure relief mechanism 213 reaches a threshold; and/or the pressure relief mechanism 213 may be a pressure-sensitive pressure relief mechanism configured to be capable of being fractured when an internal gas pressure of the battery cell 20 provided with the pressure relief mechanism 213 reaches a threshold.

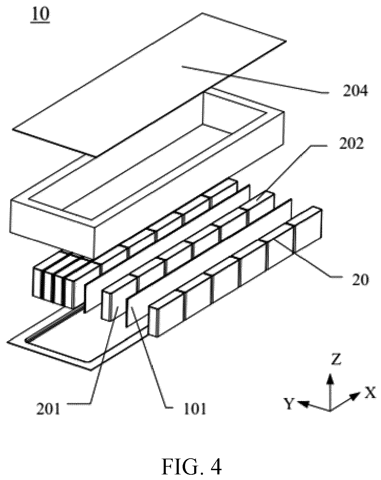

FIG. 4 shows a schematic structural diagram of a battery 10 according to an embodiment of the present application. As shown in FIG. 4, the battery 10 includes a plurality of battery cells 20 arranged in a first direction x, a spacer plate 101 and a mounting wall 204.

The first direction x is an arrangement direction of a column of battery cells 20 in the battery 10. That is, the column of battery cells 20 in the battery 10 are arranged in the x direction.

The battery cell 20 includes a first wall 201 and a second wall 201. The first wall 201 is a wall of the battery cell 20 that has a largest surface area, and the second wall 202 is connected to the first wall 201. The spacer plate 101 extends in the first direction x and is connected to the first wall 201 of each battery cell 20 of the plurality of battery cells 20.

The battery cell 20 may include a plurality of walls, and the first wall 201 of the battery cell 20 that has a largest surface area is connected to the spacer plate 101. That is, the first wall 201 of the battery cell 20 faces the spacer plate 101, that is, the first wall 201 of the battery cell 20 is parallel to the first direction x.

The spacer plate 101 is connected to the wall of the battery cell 20 that has a largest surface area, that is, the first wall 201, so that a contact area between the spacer plate 101 and the battery cell 20 is larger, which can ensure connection strength between the spacer plate 101 and the battery cell 20.

The mounting wall 204 is connected to the second wall 202 of each battery cell 20 of the plurality of battery cells 20, where when the battery cell 20 is disposed in a power consumption device, the battery cell 20 is located below the mounting wall 204, and the mounting wall 204 is configured to mount the battery cell 20.

The mounting wall 204 may be an upper cover of a box of the battery 10, or may be a part of a power consumption device, such as a chassis of a vehicle 1. When the mounting wall 204 is the chassis of the vehicle 1, the second wall 202 of the battery cell 20 is connected to the mounting wall 204, that is, the second wall 202 of the battery cell 20 is connected to the chassis surface of the vehicle 1. The battery cell 20 is directly connected to the chassis surface of the vehicle, so that the upper cover of the box of the battery 10 can be omitted, a space occupied by the upper cover of the box of the battery 10 is saved, a space utilization rate of the battery 10 is increased, and energy density of the battery 10 is improved.

In the embodiment of the present application, the spacer plate 101 is disposed in the battery 10 to be connected to the first wall 201 of each battery cell 20 of the column of the plurality of battery cells 20 arranged in the first direction x that has a largest surface area. The plurality of battery cells 20 are connected as a whole through the spacer plate 101. In this case, a side plate can no longer be configured in the battery 10, and it is also not necessary to set a structure such as a beam, which can maximize a space utilization rate of an interior of the battery 10, and improve structural strength and energy density of the battery 10. The battery 10 is further provided with a mounting wall 204 connected to the second wall 202 of each battery cell 20 of the plurality of battery cells 20 arranged in the first direction x. The second wall 202 is connected to the first wall 201, and when the battery cell 20 is disposed in a power consumption device, the battery cell 20 is located below the mounting wall 204 and mounted on the mounting wall 204. In this way, the second wall 202 of the battery cell 20 is directly connected to the mounting wall 204, and no space needs to be left between the mounting wall 204 and the battery cell 20, which further improves the space utilization rate of the interior of the battery 10 and improves the energy density of the battery 10, and meanwhile, the battery cell 20 is mounted on the mounting wall 204, which can improve the structural strength of the battery 10. Therefore, the technical solution of the embodiment of the present application can improve performance of the battery 10.

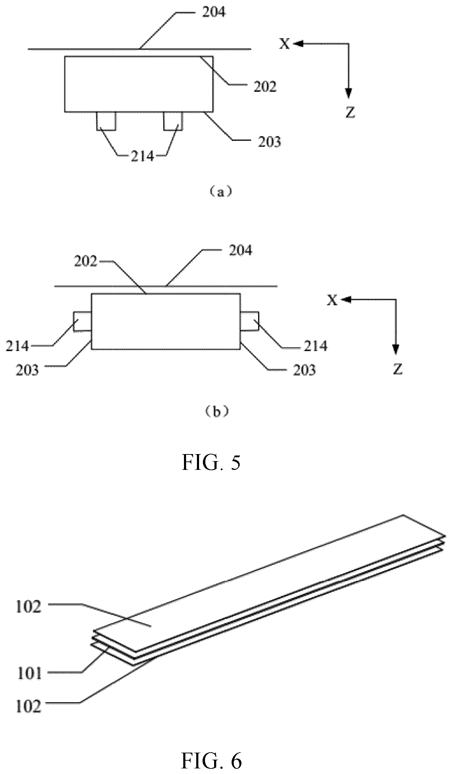

Optionally, in an embodiment of the present application, as shown in (a) of FIG. 5, a third wall 203 of the battery cell 20 is provided with an electrode terminal 214, the third wall 203 and the second wall 202 are separated and disposed opposite to each other in a second direction z, and the second direction z is perpendicular to the second wall 202.

Optionally, in another embodiment of the present application, as shown in (b) of FIG. 5, a third wall 203 of the battery cell 20 is provided with an electrode terminal 214, the third wall 203 is connected to the second wall 202, and the first direction x is perpendicular to the third wall 203.

The electrode terminal 214 is disposed on the third wall 203, the third wall 203 and the second wall 202 are separated and disposed opposite to each other in the second direction z, the second direction z is perpendicular to the second wall 202, or the third wall 203 is connected to the second wall 202, and the first direction x is perpendicular to the third wall 203. That is, the electrode terminal 214 is disposed on a wall that is not the mounting wall 204, so that there is no need to reserve a space for the electrode terminal 214 between the battery cell 20 and the mounting wall 204, and a space utilization rate of an interior of the battery 10 can be maximized, and energy density of the battery 10 is improved.

Optionally, in an embodiment of the present application, the spacer plate 101 may be a metal material plate. That is, the spacer plate 101 is made of a metal material as a whole. In this case, a surface of the spacer plate 101 is provided with an insulating layer. Optionally, the insulating layer may be an insulating film bonded to the surface of the spacer plate 101 or insulating paint coated on the surface of the spacer plate 101.

As shown in FIG. 6, the surface of the spacer plate 101 is provided with an insulating layer 102. With this configuration, the spacer plate 101 is made of a metal material, which can ensure strength of the spacer plate 101, and the insulating layer 102 can enable the surface of the spacer plate 101 that is connected to the first wall 201 to be an insulating surface.

Optionally, in an embodiment of the present application, the spacer plate 101 may be a non-metal material plate. That is, the spacer plate 101 is made of a non-metal insulating material as a whole.

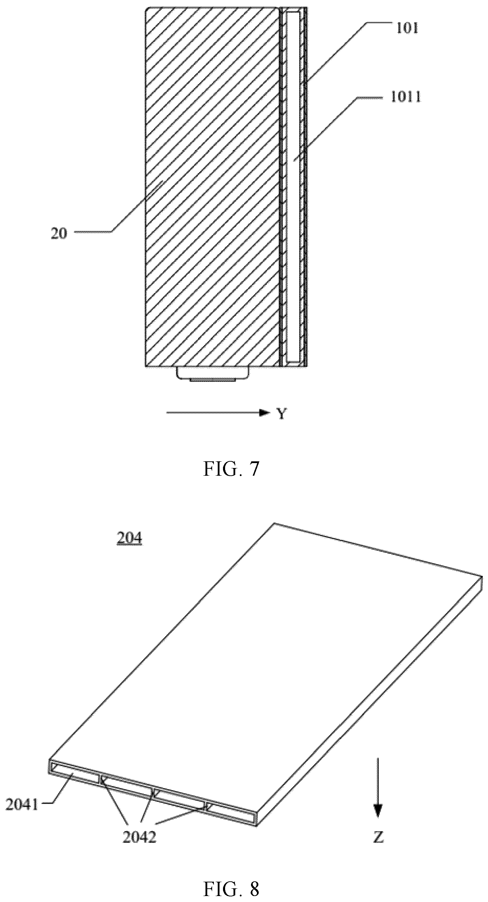

Optionally, in an embodiment of the present application, as shown in FIG. 7, a first cavity 1011 may be disposed inside the spacer plate 101. The first cavity 1011 can reduce weight of the spacer plate 101 while ensuring strength of the spacer plate 101. In addition, the first cavity 1011 can allow the spacer plate 101 to have a larger compression space in a third direction y, so that a larger expansion space can be provided for the battery cell 20.

Optionally, in an embodiment of the present application, the first cavity 1011 may be configured to accommodate a fluid to adjust a temperature of the battery cell 20.

The fluid may be a liquid or a gas, and temperature adjustment refers to heating or cooling the plurality of battery cells 20. In the case of reducing the temperature of the battery cells 20, the first cavity 1011 may accommodate a cooling medium to adjust the temperature of the plurality of battery cells 20. In this case, the fluid may also be referred to as a cooling medium or a cooling fluid, and more specifically, may be referred to as a cooling liquid or a cooling gas. In addition, the fluid may also be used for heating, which is not limited by the embodiment of the present application. Optionally, the fluid may flow in a circulating manner to achieve better temperature adjustment effects. Optionally, the fluid may be water, a mixture of water and ethylene glycol, refrigerant or air, and the like.

Optionally, in an embodiment of the present application, a size T1 of the spacer plate 101 in a third direction y is 0.1 to 100 mm.

When the size T1 of the spacer plate 101 in the third direction y is too small, stiffness of the spacer plate 101 is poor, and structural strength of the battery 10 cannot be effectively improved. When the size T1 of the spacer plate 101 in the third direction y is too large, too much space in the interior of the battery 10 will be occupied, which is not conducive to improving energy density of the battery 10. Therefore, the size T1 of the spacer plate 101 in the third direction y is set to be 0.1 to 100 mm, which can not only ensure the energy density of the battery 10, but also improve the structural strength of the battery 10.

Optionally, in an embodiment of the present application, the size T1 of the spacer plate 101 in the third direction y and a size T2 of the battery cell 20 in the third direction y satisfy: 0<T1/T2≤7.

When T1/T2 is too large, the spacer plate 101 occupies a larger space, which affects the energy density. In addition, the spacer plate 101 conducts heat to the battery cells 20 too quickly, which may also cause safety problems. For example, thermal runaway of one battery cell 20 may cause thermal runaway of another battery cell 20 connected to the same spacer plate 101. When 0<T1/T2≤7, the energy density of the battery 10 can be ensured and the safety performance of the battery 10 can be ensured.

Optionally, in an embodiment of the present application, the size T1 of the spacer plate 101 in the third direction y and the size T2 of the battery cell 20 in the third direction y may further satisfy 0<T1/T2≤1, so as to further improve the energy density of the battery 10 and ensure the safety performance of the battery 10.

Optionally, in an embodiment of the present application, a weight M1 of the spacer plate 101 and a weight M2 of the battery cell 20 satisfy: 0<M1/M2≤20.

When M1/M2 is too large, weight energy density will be lost. When 0<M1/M2≤20, the weight energy density of the battery 10 can be ensured and the safety performance of the battery 10 can be ensured.

Optionally, in an embodiment of the present application, the weight M1 of the spacer plate 101 and the weight M2 of the battery cell 20 may further satisfy 0.1≤M1/M2≤1, so as to further improve the energy density of the battery 10 and ensure the safety performance of the battery 10.

Optionally, in an embodiment of the present application, an area S1 of a surface of the spacer plate 101 that is connected to first walls 201 of the plurality of battery cells 20 and an area S2 of the first walls 201 satisfy: 0.2≤S1/S2≤30.

S1 is a total area of a side surface of the spacer plate 101 that is connected to the battery cells 20. When S1/S2 is too large, energy density will be affected. When S1/S2 is too small, thermal conduction effect is too poor, affecting safety performance. When 0.2≤S1/S2≤30, the energy density of the battery 10 can be ensured and the safety performance of the battery 10 can be ensured.

Optionally, in an embodiment of the present application, the area S1 of the surface of the spacer plate 101 that is connected to the first walls 201 of the plurality of battery cells 20 and the area S2 of the first walls 201 may further satisfy 2≤S1/S2≤10, so as to further improve the energy density of the battery 10 and ensure the safety performance of the battery 10.

Optionally, in an embodiment of the present application, a specific heat capacity Q of the spacer plate 101 and a weight M1 of the spacer plate 101 satisfy: 0.02 KJ/(kg²/°C)≤Q/M1≤100 KJ/(kg²/°C).

When Q/M1<0.02 KJ/(kg²/°C), the spacer plate 101 will absorb more energy, which results in that the temperature of the battery cell 20 is too low, and lithium precipitation may occur; and when Q/M1>100 KJ/(kg²/°C), thermal conduction capacity of the spacer plate 101 is poor, and heat cannot be taken away in time. When 0.02 KJ/(kg²/°C)≤Q/M1≤100 KJ/(kg²/°C), safety performance of the battery 10 can be ensured.

Optionally, in an embodiment of the present application, the specific heat capacity Q of the spacer plate 101 and the weight M1 of the spacer plate 101 may further satisfy 0.3 KJ/(kg²/°C)≤Q/M1≤20 KJ/(kg²/°C), so as to further improve the safety performance of the battery 10.

Optionally, in an embodiment of the present application, as shown in FIG. 8, a second cavity 2041 may be disposed in an interior of the mounting wall 204. The second cavity 2041 can reduce weight of the mounting wall 204 while ensuring strength of the mounting wall 204. In addition, the second cavity 2041 can allow the mounting wall 204 to have a larger compression space in the second direction z, so that a larger expansion space can be provided for the battery cell 20.

Optionally, in an embodiment of the present application, the second cavity 2041 may be configured to accommodate a fluid to adjust a temperature of the battery cell 20.

The fluid may be a liquid or a gas, and temperature adjustment refers to heating or cooling the plurality of battery cells 20. In the case of reducing the temperature of the battery cells 20, the first cavity 1011 may accommodate a cooling medium to adjust the temperature of the plurality of battery cells 20. In this case, the fluid may also be referred to as a cooling medium or a cooling fluid, and more specifically, may be referred to as a cooling liquid or a cooling gas. In addition, the fluid may also be used for heating, which is not limited by the embodiment of the present application. Optionally, the fluid may flow in a circulating manner to achieve better temperature adjustment effects. Optionally, the fluid may be water, a mixture of water and ethylene glycol, refrigerant or air, and the like.

Optionally, in an embodiment of the present application, a reinforcing member 2042 may further be disposed in the second cavity 2041, so that the strength of the mounting wall 204 can be improved.

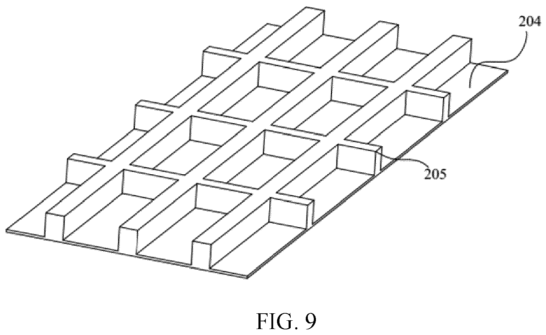

Optionally, in an embodiment of the present application, as shown in FIG. 9, the battery 10 further includes a reinforcing rib 205, and the reinforcing rib 205 is disposed on a surface of the mounting wall 204 that is away from the battery cell 20 in a second direction z.

Optionally, in an embodiment of the present application, the reinforcing rib 205 and the mounting wall 204 are of an integrally formed structure. This integrally formed structure is easy to process and assemble, and the structure may also be formed by splicing, welding, bonding, machining, stamping, etc., which is not limited in the present application.

Optionally, in an embodiment of the present application, the battery 10 includes multiple columns of the plurality of battery cells 20 arranged in the first direction x and a plurality of spacer plates 101, where the multiple columns of the battery cells 20 and the plurality of spacer plates 101 are alternately disposed in a third direction y, and the third direction y is perpendicular to the first wall 201. That is, the multiple columns of battery cells 20 and the plurality of spacer plates 101 may be arranged in the order of a spacer plate 101, a column of battery cells 20, a spacer plate 101, ..., or, a column of battery cells 20, a spacer plate 101, a column of battery cells 20, .... In this way, the multiple columns of battery cells 20 and the plurality of spacer plates 101 are connected to each other to form a whole, and are accommodated in a box 11, which can not only effectively conduct heat to each column of battery cells 20, but also ensure the overall structural strength of the battery 10, so that the performance of the battery 10 can be improved.

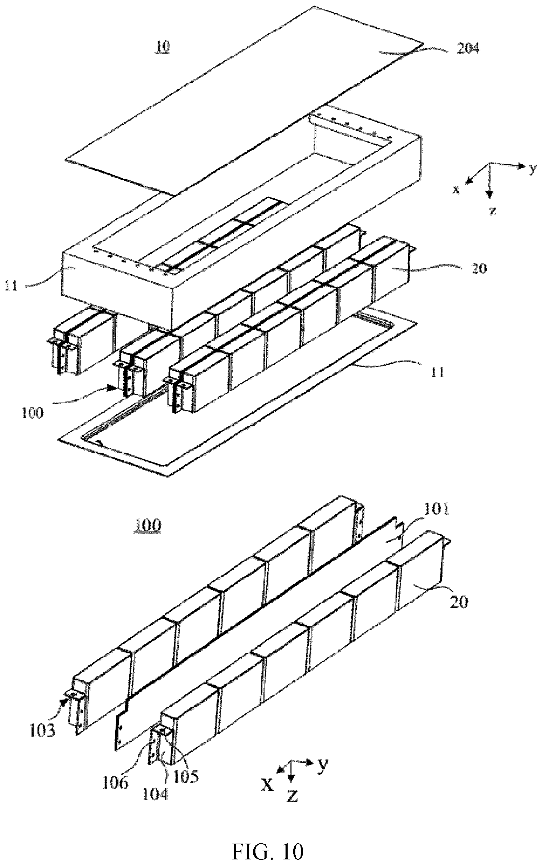

FIG. 10 shows a schematic structural diagram of a battery 10 according to another embodiment of the present application. As shown in FIG. 10, the battery 10 may include a plurality of battery modules 100, the battery module 100 includes at least one column of the plurality of battery cells 20 arranged in the first direction x and at least one spacer plate 101, and the at least one column of the battery cells 20 and the at least one spacer plate 101 are alternately disposed in a third direction y. That is, for each battery module 100, the column(s) of battery cells 20 and the spacer plate(s) 101 are alternately disposed in the third direction y, and the plurality of battery modules 100 are accommodated in a box 11 to form the battery 10.

Optionally, the battery module 100 may include N columns of the battery cells 20 and N-1 spacer plate(s) 101, the spacer plate 101 is disposed between two adjacent columns of the battery cells 20, and N is an integer greater than 1. That is, the spacer plate 101 is disposed in an interior of the battery module 100, and the spacer plate 101 is not disposed on an outer side of the battery module 100. For example, one spacer plate 101 is disposed between two columns of battery cells 20, two spacer plates 101 are disposed between three columns of battery cells 20, and so on.

Optionally, in an embodiment of the present application, as shown in FIG. 10, the battery module 100 includes two columns of battery cells 20, that is, N is 2. Correspondingly, one spacer plate 101 is disposed between the two columns of battery cells 20. No spacer plate 101 is disposed between adjacent battery modules 100. In this way, in this embodiment, fewer spacer plate 101 can be disposed in the battery 10, but at the same time, it can be ensured that each battery cell 20 can be connected to the spacer plate 101.

Optionally, in an embodiment of the present application, the plurality of battery modules 100 are arranged in the third direction y, and a gap is provided between adjacent battery modules 100. There is no spacer plate 101 but a certain gap between the adjacent battery modules 100. The gap between the adjacent battery modules 100 can provide an expansion space for the battery cells 20.

Optionally, an end portion of the spacer plate 101 in the first direction x is provided with a fixing structure 103, and the spacer plate 101 is fixed to the mounting wall 204 through the fixing structure 103. The fixing structure 103 may be directly connected to the mounting wall 204, or may be connected to a side wall of a box 11 and further connected to the mounting wall 204. In this way, each battery cell 20 is fixed to the mounting wall 204 by the spacer plate 101 and the fixing structure 103, so that fixed connection between the battery cell 20 and the mounting wall 204 is enhanced, the entire battery 10 is connected as a whole, and the structural strength of the battery 10 is improved.

Optionally, the fixing structure 103 may include a fixing plate 104. The fixing plate 104 is fixedly connected to the end portion of the spacer plate 101, and is fixedly connected to the battery cell 20 located at the end portion of the spacer plate 101. For example, for a cuboid battery cell 20, the fixing plate 104 may be vertically connected to the spacer plate 101, and the fixing plate 104 and the spacer plate 101 are connected to two adjacent side walls of the cuboid battery cell 20 respectively, so as to further strengthen the fixing effect of the battery cell 20.

Optionally, the fixing plate 104 may be made of the same material as that of the spacer plate 101, for example, metal, plastic or composite materials. A thickness of the fixing plate 104 may be the same as that of the spacer plate 101. The material or thickness of the fixing plate 104 may also be different from that of the spacer plate 101. For example, the fixing plate 104 may be configured with a higher strength or thickness, but this is not limited by the embodiment of the present application.

Optionally, connection between the spacer plate 101 and the fixing plate 104 may be resistance welding, resistance riveting, SPR riveting, locking bolts, or clamping; and the fixing plate 104 may also be fixed to the mounting wall 204 in a connection method such as resistance welding, resistance riveting, SPR riveting, locking bolts, or clamping, but this is not limited by the embodiment of the present application.

Optionally, the fixing plate 104 and the battery cell 20 may be fixedly connected by means of bonding, such as boding by structural glue, but this is not limited by the embodiment of the present application.

Optionally, the fixing plate 104 includes a first connecting portion 105 formed by extending in the first direction towards a direction away from the battery cell 20, and the first connecting portion 105 is configured to connect the mounting wall 204.

The first connecting portion 105 may be parallel to the mounting wall 204, and an area of the first connecting portion 105 may be set according to the method of fixing with a side wall of a box 11 to be connected so as to meet the required fixing effect.

Optionally, the first connecting portion 105 may be formed by bending the fixing plate 104. For example, the first connecting portion 105 may be formed by bending an edge of the fixing plate 104 close to the mounting wall 204 in a direction away from the battery cell 20. For example, an upper edge of the fixing plate 104 may be bent outward to form the first connecting portion 105. In this way, the first connecting portion 105 and a main body of the fixing plate 104 are of an integral structure, which can enhance connection performance.

Optionally, in an embodiment of the present application, the fixing plate 104 further includes a second connecting portion 106 formed by extending in the first direction towards a direction away from the battery cell 20, and the second connecting portion 106 is configured to connect the fixing plate 104 and the spacer plate 101. For example, at a position where the fixing plate 104 is connected to the spacer plate 101, a second connecting portion 106 may be formed in a direction away from the battery cell 20, that is, extending outward, and the fixing plate 104 is fixedly connected to the spacer plate 101 through the second connecting portion 106.

Optionally, in addition to connecting the spacer plate 101, the second connecting portion 106 may also implement the connection between fixing plates 104 at the same time. For example, one fixing plate 104 is provided for each column of battery cells, and the spacer plate 101 and two fixing plates 104 corresponding to two columns of battery cells 20 are fixed together through the second connecting portion 106.

The second connecting portion 106 may be parallel to the spacer plate 101. An area of the second connecting portion 106 may be set according to the fixing method so as to meet the required fixing effect.

Optionally, in an embodiment of the present application, the spacer plate 101 is bonded to the first wall 201. That is, the spacer plate 101 and the battery cell 20 may be fixedly connected by means of bonding, such as boding by structural glue, but this is not limited by the embodiment of the present application.

Optionally, in an embodiment of the present application, the mounting wall 204 is bonded to the second wall 202. That is, the mounting wall 204 and the battery cell 20 may be fixedly connected by means of bonding, such as boding by structural glue, but this is not limited by the embodiment of the present application.

It should be understood that the relevant parts in each embodiment of the present application may be referred to each other, and for the sake of brevity, details are not described herein again.

An embodiment of the present application further provides a power consumption device, the power consumption device may include the battery 10 in the above embodiments. Optionally, the power consumption device may be a vehicle 1, a ship or a spacecraft, etc., but this is not limited by the embodiment of the present application.

The battery 10 and the power consumption device according to the embodiments of the present application are described above. A method and device for producing a battery 10 according to embodiments of the present application will be described below, and for parts that are not described in detail, reference is made to the above embodiments.

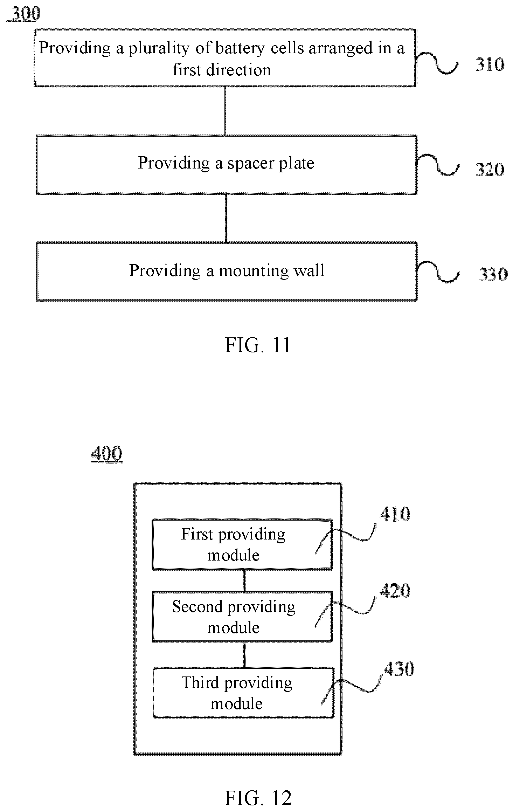

FIG. 11 shows a schematic flowchart of a method 300 for producing a battery 10 according to an embodiment of the present application. As shown in FIG. 11, the method 300 may include:
310, providing a plurality of battery cells 20 arranged in a first direction x, a battery cell 20 including a first wall 201 and a second wall 202, the first wall 201 being a wall of the battery cell 20 that has a largest surface area, and the second wall 202 being connected to the first wall 201;
320, providing a spacer plate 101, the spacer plate 101 extending in the first direction x and connected to the first wall 201 of each battery cell 20 of the plurality of battery cells 20; and
330, providing a mounting wall 204, the mounting wall 204 being connected to the second wall 202 of each battery cell 20 of the plurality of battery cells 20, where when the battery cell 20 is disposed in a power consumption device, the battery cell 20 is located below the mounting wall 204, and the mounting wall 204 is configured to mount the battery cell 20.

FIG. 12 shows a schematic block diagram of a device 400 for producing a battery 10 according to an embodiment of the present application. As shown in FIG. 12, the device 400 for producing the battery 10 may include:
a first providing module 410 configured to provide a plurality of battery cells 20 arranged in a first direction x, a battery cell 20 including a first wall 201 and a second wall 202, the first wall 201 being a wall of the battery cell 20 that has a largest surface area, and the second wall 202 being connected to the first wall 201;
a second providing module 420 configured to provide a spacer plate 101, the spacer plate 101 extending in the first direction x and connected to the first wall 201 of each battery cell 20 of the plurality of battery cells 20; and
a third providing module 430 configured to provide a mounting wall 204, the mounting wall 204 being connected to the second wall 202 of each battery cell 20 of the plurality of battery cells 20, where when the battery cell 20 is disposed in a power consumption device, the battery cell 20 is located below the mounting wall 204, and the mounting wall 204 is configured to mount the battery cell 20.

Embodiments of the present application will be illustrated hereinafter. The embodiments described below are exemplary and merely used to explain the present application, and may not be understood as limitation to the present application. If no specific technique or condition is indicated in the embodiments, a technique or condition described in the literature in the field or product specification is adopted.

Using the battery cell 20 and the spacer plate 101 shown in the drawings, safety test is performed on the battery 10 according to GB38031-2020, and test results are shown in Tables 1-4.

**Table 1**

| No. | T1/(mm) | T2/(mm) | T1/T2 | Test results |
|---|---|---|---|---|
| 1 | 0.2 | 40 | 0.005 | No fire, no explosion |
| 2 | 0.4 | 50 | 0.008 | No fire, no explosion |
| 3 | 0.7 | 45 | 0.016 | No fire, no explosion |
| 4 | 4 | 10 | 0.4 | No fire, no explosion |
| 5 | 4 | 40 | 0.1 | No fire, no explosion |
| 6 | 45 | 15 | 3 | No fire, no explosion |
| 7 | 150 | 10 | 15 | Fire, explosion |

**Table 2**

| No. | M1/Kg | M2/Kg | M1/M2 | Test results |
|---|---|---|---|---|
| 1 | 0.2 | 3 | 0.068 | No fire, no explosion |
| 2 | 0.4 | 2.5 | 0.16 | No fire, no explosion |
| 3 | 0.7 | 1.5 | 0.467 | No fire, no explosion |
| 4 | 10 | 1.5 | 6.7 | No fire, no explosion |
| 5 | 15 | 1 | 15 | No fire, no explosion |

**Table 3**

| No. | S1/mm² | S2/mm² | S1/S2 | Test results |
|---|---|---|---|---|
| 1 | 3120 | 21728 | 0.14 | Fire, explosion |
| 2 | 19500 | 38800 | 0.5 | No fire, no explosion |
| 3 | 65000 | 16800 | 3.87 | No fire, no explosion |
| 4 | 130000 | 16576 | 7.84 | No fire, no explosion |
| 5 | 216000 | 9600 | 22.5 | No fire, no explosion |
| 6 | 250000 | 7200 | 34.72 | Fire, explosion |

**Table 4**

| No. | Q/KJ/(kg²/°C) | M1/kg | Q/M1 (KJ/(kg2/°C)) | Test results |
|---|---|---|---|---|
| 1 | 0.39 | 25 | 0.016 | Fire, explosion |
| 2 | 0.46 | 5 | 0.092 | No fire, no explosion |
| 3 | 0.88 | 0.5 | 1.76 | No fire, no explosion |
| 4 | 4 | 0.4 | 10 | No fire, no explosion |
| 5 | 4 | 0.1 | 40 | No fire, no explosion |
| 6 | 4 | 0.025 | 160 | Fire, explosion |

It can be seen from the above test results that the battery 10 provided by the present application can meet safety performance requirements.

Although the present application has already been described with reference to preferred embodiments, as long as there is no structural conflict, various technical features mentioned in various embodiments may be combined in any manner. The present application is not limited to the specific embodiments disclosed herein, and includes all technical solutions falling within the scope of the claims.

## Claims

1. A battery (10), comprising:
a plurality of battery cells (20) arranged in a first direction, each battery cell (20) comprising a first wall (201) and a second wall (202), the first wall (201) being a wall of the battery cell (20) that has a largest surface area, and the second wall (202) being connected to the first wall (201);
a spacer plate (101), the spacer plate (101) extending in the first direction and connected to the first wall (201) of each battery cell (20) of the plurality of battery cells (20), the first wall (201) being parallel to the first direction; and
a mounting wall (204), the mounting wall (204) being connected to the second wall (202) of each battery cell (20) of the plurality of battery cells (20), wherein when the battery (10) is disposed in a power consumption device, each the battery cell (20) is located below the mounting wall (204), and the mounting wall (204) is configured to mount the battery cell (20).

2. The battery (10) according to claim 1, wherein a third wall (203) of the battery cell (20) is provided with an electrode terminal (214), the third wall (203) and the second wall (202) are separated and disposed opposite to each other in a second direction, and the second direction is perpendicular to the second wall (202); or
the third wall (203) is connected to the second wall (202), and the first direction is perpendicular to the third wall (203).

3. The battery (10) according to claim 1 or 2, wherein a first cavity (1011) is disposed inside the spacer plate (101).

4. The battery (10) according to claim 3, wherein the first cavity (1011) is configured to accommodate a fluid to adjust a temperature of the battery cell (20).

5. The battery (10) according to any one of claims 1 to 4, wherein a size T1 of the spacer plate (101) in a third direction is 0.1 to 100 mm, and the third direction is perpendicular to the first wall (201).

6. The battery (10) according to claim 5, wherein the size T1 of the spacer plate (101) in the third direction and a size T2 of the battery cell (20) in the third direction satisfy: 0<T1/T2≤7.

7. The battery (10) according to any one of claims 1 to 6, wherein a weight M1 of the spacer plate (101) and a weight M2 of the battery cell (20) satisfy: 0<M1/M2≤20.

8. The battery (10) according to any one of claims 1 to 7, wherein an area S1 of a surface of the spacer plate (101) that is connected to first walls (201) of the plurality of battery cells (20) and an area S2 of the first wall (201) satisfy: 0.2≤S1/S2≤30.

9. The battery (10) according to any one of claims 1 to 8, wherein a specific heat capacity Q of the spacer plate (101) and a weight M1 of the spacer plate (101) satisfy: 0.02 KJ/(kg²/°C)≤Q/M1≤100 KJ/(kg²/°C).

10. The battery (10) according to any one of claims 1 to 9, wherein a second cavity (2041) is disposed in an interior of the mounting wall (204).

11. The battery (10) according to claim 10, wherein the second cavity (2041) is configured to accommodate a fluid to adjust a temperature of the battery cell (20).

12. The battery (10) according to any one of claims 1 to 11, wherein the battery (10) comprises multiple columns of the plurality of battery cells (20) arranged in the first direction and the plurality of spacer plates (101), wherein the multiple columns of the battery cells (20) and the plurality of spacer plates (101) are alternately disposed in a third direction, and the third direction is perpendicular to the first wall (201).

13. The battery (10) according to any one of claims 1 to 11, wherein the battery (10) comprises a plurality of battery modules (100), the battery module (100) comprises at least one column of the plurality of battery cells (20) arranged in the first direction and at least one spacer plate (101), and at least one column of the battery cells (20) and at least one spacer plate (101) are alternately disposed in a third direction, and the third direction is perpendicular to the first wall (201).

14. The battery (10) according to any one of claims 1 to 13, wherein an end portion of the spacer plate (101) in the first direction is provided with a fixing structure (103), and the spacer plate (101) is fixed to the mounting wall (204) through the fixing structure (103).

15. A power consumption device, comprising: the battery (10) according to any one of claims 1 to 14, the battery (10) being configured to provide electric energy.

## Patentansprüche

1. Batterie (10), die Folgendes umfasst:
mehrere Batteriezellen (20), die in einer ersten Richtung angeordnet sind, wobei jede Batteriezelle (20) eine erste Wand (201) und eine zweite Wand (202) umfasst, wobei die erste Wand (201) eine Wand der Batteriezelle (20) ist, die einen größten Flächeninhalt aufweist, und die zweite Wand (202) mit der ersten Wand (201) verbunden ist;
eine Abstandhalterplatte (101), wobei sich die Abstandhalterplatte (101) in der ersten Richtung erstreckt und mit der ersten Wand (201) jeder Batteriezelle (20) der mehreren Batteriezellen (20) verbunden ist, wobei die erste Wand (201) zur ersten Richtung parallel ist; und
eine Montagewand (204), wobei die Montagewand (204) mit der zweiten Wand (202) jeder Batteriezelle (20) der mehreren Batteriezellen (20) verbunden ist, wobei dann, wenn die Batterie (10) in einer Energieverbrauchsvorrichtung angeordnet ist, jede Batteriezelle (20) unter der Montagewand (204) angeordnet ist und die Montagewand (204) konfiguriert ist, die Batteriezelle (20) anzubringen.

2. Batterie (10) nach Anspruch 1, wobei eine dritte Wand (203) der Batteriezelle (20) mit einem Elektrodenanschluss (214) versehen ist, die dritte Wand (203) und die zweite Wand (202) getrennt und einander gegenüberliegend in einer zweiten Richtung angeordnet sind und die zweite Richtung zur zweiten Wand (202) senkrecht ist; oder
die dritte Wand (203) mit der zweiten Wand (202) verbunden ist und die erste Richtung zur dritten Wand (203) senkrecht ist.

3. Batterie (10) nach Anspruch 1 oder 2, wobei ein erster Hohlraum (1011) im Inneren der Abstandhalterplatte (101) angeordnet ist.

4. Batterie (10) nach Anspruch 3, wobei der erste Hohlraum (1011) konfiguriert ist, ein Fluid aufzunehmen, um eine Temperatur der Batteriezelle (20) einzustellen.

5. Batterie (10) nach einem der Ansprüche 1 bis 4, wobei eine Größe T1 der Abstandhalterplatte (101) in einer dritten Richtung im Bereich von 0,1 bis 100 mm liegt und die dritte Richtung zur ersten Wand (201) senkrecht ist.

6. Batterie (10) nach Anspruch 5, wobei die Größe T1 der Abstandhalterplatte (101) in der dritten Richtung und eine Größe T2 der Batteriezelle (20) in der dritten Richtung Folgendes erfüllen: 0 < T1/T2 ≤ 7.

7. Batterie (10) nach einem der Ansprüche 1 bis 6, wobei ein Gewicht M1 der Abstandhalterplatte (101) und ein Gewicht M2 der Batteriezelle (20) Folgendes erfüllen: 0 < M1/M2 ≤20.

8. Batterie (10) nach einem der Ansprüche 1 bis 7, wobei ein Flächeninhalt S1 einer Fläche der Abstandhalterplatte (101), die mit den ersten Wänden (201) der mehreren Batteriezellen (20) verbunden ist, und ein Flächeninhalt S2 der ersten Wand (201) Folgendes erfüllen: 0,2 ≤ S1/S2 ≤ 30.

9. Batterie (10) nach einem der Ansprüche 1 bis 8, wobei eine spezifische Wärmekapazität Q der Abstandhalterplatte (101) und ein Gewicht M1 der Abstandhalterplatte (101) Folgendes erfüllen: 0,02 kJ/(kg²/°C) ≤ Q/M1 ≤ 100 kJ/(kg²/°C).

10. Batterie (10) nach einem der Ansprüche 1 bis 9, wobei ein zweiter Hohlraum (2041) in einem Innenraum der Montagewand (204) angeordnet ist.

11. Batterie (10) nach Anspruch 10, wobei der zweite Hohlraum (2041) konfiguriert ist, ein Fluid aufzunehmen, um eine Temperatur der Batteriezelle (20) einzustellen.

12. Batterie (10) nach einem der Ansprüche 1 bis 11, wobei die Batterie (10) mehrere Säulen der mehreren Batteriezellen (20), die in der ersten Richtung angeordnet sind, und die mehreren Abstandhalterplatten (101) umfasst, wobei die mehreren Säulen der Batteriezellen (20) und die mehreren Abstandhalterplatten (101) in einer dritten Richtung abwechselnd angeordnet sind und die dritte Richtung zur ersten Wand (201) senkrecht ist.

13. Batterie (10) nach einem der Ansprüche 1 bis 11, wobei die Batterie (10) mehrere Batteriemodule (100) umfasst, das Batteriemodul (100) mindestens eine Säule der mehreren Batteriezellen (20), die in der ersten Richtung angeordnet sind, und mindestens eine Abstandhalterplatte (101) umfasst und mindestens eine Säule der Batteriezellen (20) und mindestens eine Abstandhalterplatte (101) in einer dritten Richtung abwechselnd angeordnet sind und die dritte Richtung zur ersten Wand (201) senkrecht ist.

14. Batterie (10) nach einem der Ansprüche 1 bis 13, wobei ein Endabschnitt der Abstandhalterplatte (101) in der ersten Richtung mit einer Befestigungsstruktur (103) versehen ist und die Abstandhalterplatte (101) durch die Befestigungsstruktur (103) an der Montagewand (204) befestigt ist.

15. Energieverbrauchsvorrichtung, die Folgendes umfasst: die Batterie (10) nach einem der Ansprüche 1 bis 14, wobei die Batterie (10) konfiguriert ist, elektrische Energie bereitzustellen.

## Revendications

1. Batterie (10), comprenant :
une pluralité d'éléments de batterie (20) disposés dans une première direction, chaque élément de batterie (20) comportant une première paroi (201) et une deuxième paroi (202), la première paroi (201) étant une paroi de l'élément de batterie (20) qui a la plus grande surface active, et la deuxième paroi (202) étant reliée à la première paroi (201) ;
une plaque d'écartement (101), cette plaque d'écartement (101) s'étendant dans la première direction et étant reliée à la première paroi (201) de chaque élément de batterie (20) parmi la pluralité d'éléments de batterie (20), la première paroi (201) étant parallèle à la première direction ; et
une paroi de montage (204), cette paroi de montage (204) étant reliée à la deuxième paroi (202) de chaque élément de batterie (20) parmi la pluralité d'éléments de batterie (20), et, lorsque la batterie (10) est disposée dans un dispositif de consommation d'énergie, chaque élément de batterie (20) est situé en dessous de cette paroi de montage (204), et cette paroi de montage (204) est configurée de façon à monter l'élément de batterie (20).

2. Batterie (10) selon la revendication 1, dans lequel une troisième paroi (203) de l'élément de batterie (20) est pourvue d'une borne d'électrode (214), cette troisième paroi (203) et la deuxième paroi (202) étant séparées et disposées en face l'une de l'autre dans une deuxième direction, et cette deuxième direction étant perpendiculaire à la deuxième paroi (202) ; ou dans laquelle
la troisième paroi (203) est reliée à la deuxième paroi (202), et la première direction est perpendiculaire à la troisième paroi (203).

3. Batterie (10) selon la revendication 1 ou 2, dans laquelle une première cavité (1011) est disposée à l'intérieur de la plaque d'écartement (101).

4. Batterie (10) selon la revendication 3, dans laquelle la première cavité (1011) est configurée de façon à contenir un fluide pour régler une température de l'élément de batterie (20).

5. Batterie (10) selon l'une quelconque des revendications 1 à 4, dans laquelle une taille T1 de la plaque d'écartement (101) dans une troisième direction est de 0,1 à 100 mm, et dans laquelle cette troisième direction est perpendiculaire à la première paroi (201).

6. Batterie (10) selon la revendication 5, dans laquelle la taille T1 de la plaque d'écartement (101) dans la troisième direction et une taille T2 de l'élément de batterie (20) dans la troisième direction satisfont : 0 < T1/T2 ≤ 7.

7. Batterie (10) selon l'une quelconque des revendications 1 à 6, dans laquelle un poids M1 de la plaque d'écartement (101) et un poids M2 de l'élément de batterie (20) satisfont : 0 < M1/M2 ≤ 20.

8. Batterie (10) selon l'une quelconque des revendications 1 à 7, dans laquelle une superficie S1 d'une surface de la plaque d'écartement (101) qui est reliée aux premières parois (201) de la pluralité d'éléments de batterie (20) et une superficie S2 de la première paroi (201) satisfont : 0,2 ≤ S1/S2 ≤ 30.

9. Batterie (10) selon l'une quelconque des revendications 1 à 8, dans laquelle une chaleur massique Q de la plaque d'écartement (101) et un poids M1 de la plaque d'écartement (101) satisfont : 0,02 KJ/(kg²/°C) ≤ Q/M1 ≤ 100 KJ/(kg²/°C).

10. Batterie (10) selon l'une quelconque des revendications 1 à 9, dans laquelle une deuxième cavité (2041) est disposée dans un intérieur de la paroi de montage (204).

11. Batterie (10) selon la revendication 10, dans laquelle la deuxième cavité (2041) est configurée de façon à contenir un fluide pour régler une température de l'élément de batterie (20).

12. Batterie (10) selon l'une quelconque des revendications 1 à 11, cette batterie (10) comportant des colonnes multiples de la pluralité d'éléments de batterie (20) disposées dans la première direction et la pluralité de plaques d'écartement (101), ces colonnes multiples des éléments de batterie (20) et la pluralité de plaques d'écartement (101) étant disposées alternativement dans une troisième direction, et cette troisième direction étant perpendiculaire à la première paroi (201).

13. Batterie (10) selon l'une quelconque des revendications 1 à 11, cette batterie (10) comportant une pluralité de modules de batterie (100), le module de batterie (100) comportant au moins une colonne de la pluralité d'éléments de batterie (20) disposée dans la première direction et au moins une plaque d'écartement (101), et dans laquelle au moins une colonne des éléments de batterie (20) et au moins une plaque d'écartement (101) sont disposées alternativement dans une troisième direction, et cette troisième direction étant perpendiculaire à la première paroi (201).

14. Batterie (10) selon l'une quelconque des revendications 1 à 13, dans laquelle une partie extrême de la plaque d'écartement (101) dans la première direction est pourvue d'une structure de fixation (103), et dans laquelle la plaque d'écartement (101) est fixée à la paroi de montage (204) au moyen de cette structure de fixation (103).

15. Dispositif de consommation d'énergie, comportant : la batterie (10) selon l'une quelconque des revendications 1 à 14, cette batterie (10) étant configurée de façon à fournir de l'énergie électrique.
